# FASCICULE DE BREVET EUROPEEN

(11) **EP 0 592 264 B1**
(45) Date de publication et mention de la délivrance du brevet: **12.06.1996**
(21) Numéro de dépôt: 93402294.8
(22) Date de dépôt: 20.09.1993
(51) Int. Cl.: B62D 1/18

(54) **Dispositif de blocage en position d'une colonne de direction réglable par exemple de véhicule automobile et ensemble de colonne comportant un tel dispositif**
Lagesperrvorrichtung für eine verstellbare Lenksäule, zum Beispiel eines Kraftfahrzeuges und Lenksäuleeinrichtung mit so einer Vorrichtung
Device for locking an adjustable steering column for example of an automotive vehicle and steering column unit comprising such a device

(30) Priorité: 06.10.1992 FR 9211835
(43) Date de publication de la demande: 13.04.1994
(73) Titulaire: ECIA - EQUIPEMENTS ET COMPOSANTS POUR L'INDUSTRIE AUTOMOBILE, F-25400 Audincourt (FR)
(72) Inventeur: Courvoisier, Patrick, F-25600 Sochaux (FR)
(74) Mandataire: Habasque, Etienne Joel Jean-François

(56) Documents cités:
- EP-A- 0 242 928
- EP-A- 0 427 584
- EP-A- 0 443 910
- EP-A- 0 493 181
- GB-A- 2 113 164

## Description

La présente invention concerne un dispositif de blocage en position d'une colonne de direction réglable par exemple de véhicule automobile et un ensemble de colonne comportant un tel dispositif.

Certains véhicules automobiles sont munis depuis déjà plusieurs années de dispositifs de réglage de la position du volant, destinés à adapter la position de celui-ci à la morphologie du conducteur du véhicule.

C'est ainsi que la position de la colonne et donc du volant est réglable axialement et par pivotement.

Dans l'état de la technique, ces dispositifs de réglage comportent une structure de support de colonne reliée au reste de la structure du véhicule et comportant deux flasques entre lesquels est disposée la colonne et des moyens de blocage de la colonne en position par rapprochement de flasques.

Ces moyens de blocage comprennent par exemple un tirant s'étendant entre les flasques, dont une première extrémité est en appui sur l'un des flasques et dont une seconde est reliée à des éléments de blocage.

Différents modes de réalisation de ces éléments de blocage ont été proposés.

C'est ainsi par exemple, que ces éléments de blocage peuvent être constitués par un système à vis-écrou, un système à genouillère, ou encore un système à excentrique, relié à un levier de manoeuvre.

Un autre mode de réalisation de ces moyens de blocage est décrit dans le document GB-A-2 113 164 au nom de FORD MOTOR COMPANY LIMITED.

Ce document décrit en effet un dispositif dont la structure générale se présente sous la forme décrite précédemment et dans laquelle les éléments de blocage comprennent un organe de butée à la seconde extrémité du tirant, un organe d'appui intermédiaire en contact avec l'autre flasque de la structure de support et déplaçable axialement sur le tirant et un organe de manoeuvre disposé entre l'organe de butée et l'organe d'appui intermédiaire, relié à un levier de manoeuvre, et déplaçable à rotation dans un plan perpendiculaire au tirant, entre une position active de blocage de la colonne et une position escamotée de déblocage de celle-ci.

Les surfaces en regard de l'organe de manoeuvre et de l'organe d'appui intermédiaire ou de l'organe de butée, comprennent l'une, au moins une partie en saillie adaptée pour coopérer avec une rampe de l'autre, pour écarter ces deux surfaces l'une de l'autre et donc les éléments de blocage correspondants afin de rapprocher les flasques pour bloquer la colonne, lors du déplacement du levier de manoeuvre.

Dans le mode de réalisation décrit dans ce document, les parties en saillie sont constituées par des bossages venus de matière avec l'organe de manoeuvre et les rampes sont ménagées sur l'organe d'appui intermédiaire .

Cependant, ce dispositif présente un certain nombre d'inconvénients au niveau de la manoeuvre du levier.

En effet, on conçoit que plus le serrage de la colonne à obtenir est important, plus les frottements entre ces différents éléments de blocage sont importants et donc plus la manoeuvre du levier est difficile.

Le document FR-A-2 671 040 au nom de la Demanderesse (correspondant lui aussi au préambule de la revendication 1), propose différentes solutions pour résoudre ces problèmes.

A cet effet, ce document concerne un dispositif de blocage tel que décrit précédemment, dans lequel ladite partie en saillie comprend un organe de roulement relié à l'élément de blocage correspondant.

Deux organes de roulement peuvent être disposés sur l'élément de blocage correspondant, de part et d'autre du tirant et être adaptés pour coopérer chacun avec une rampe en regard, de la surface correspondante de l'autre élément.

Avantageusement, ces organes de roulement sont interposés entre l'organe de manoeuvre et l'organe d'appui intermédiaire et des éléments de roulement sont interposés entre l'organe de butée et l'organe de manoeuvre.

Selon un mode de réalisation particulièrement avantageux décrit dans ce document, le ou chaque organe de roulement interposé entre l'organe de manoeuvre et l'organe d'appui intermédiaire et le ou chaque élément de roulement interposé entre l'organe de manoeuvre et l'organe de butée de la seconde extrémité du tirant, sont disposés deux à deux dans un même évidement traversant l'organe de manoeuvre, en appui l'un contre l'autre, l'un faisant saillie entre l'organe de manoeuvre et l'organe d'appui intermédiaire et l'autre, entre l'organe de manoeuvre et l'organe de butée.

Il est mentionné dans ce document que ces organes et ces éléments de roulement peuvent être constitués par des billes.

Cependant, les différents modes de réalisation décrits dans ce document, bien que présentant un certain nombre d'avantages par rapport aux dispositifs classiques, restent le siège de frottements et d'usure de pièces et en particulier des organes et des éléments de roulement, ce qui à la longue se traduit par des problèmes de fonctionnement du dispositif.

Bien entendu, ces problèmes peuvent être résolus en utilisant des pièces présentant des caractéristiques de résistance mécanique adaptées, mais ceci se traduit alors par une augmentation du coût de fabrication du dispositif.

Le but de la présente invention est de résoudre ces problèmes d'usure en proposant un dispositif qui soit simple, fiable dont le prix de revient soit le plus faible possible.

A cet effet, l'invention a pour objet un dispositif de blocage en position d'une colonne de direction réglable par exemple de véhicule automobile, du type comportant une structure de support de colonne, reliée au reste de la structure du véhicule et comportant deux flasques entre lesquels est disposée la colonne, et des moyens de blocage de la colonne en position par rapprochement des flasques, comprenant un tirant s'étendant entre les flasques, dont une première extrémité est en appui sur l'un des flasques et une seconde est reliée à des éléments de blocage comprenant un organe de butée, à la seconde extrémité du tirant, un organe d'appui intermédiaire en contact avec l'autre flasque de la structure de support et déplaçable axialement sur le tirant et des moyens d'écartement disposés entre l'organe de butée et l'organe d'appui intermédiaire, reliés à des moyens de manoeuvre et déplaçables à rotation dans un plan perpendiculaire au tirant entre une position active de blocage de la colonne et une position escamotée de déblocage de celle-ci, caractérisé en ce que les moyens d'écartement comprennent :
- une rondelle intermédiaire d'appui montée libre en rotation et axialement autour du tirant;
- des moyens de roulement disposés entre des surfaces en regard de cette rondelle intermédiaire d'appui et de l'un des organes d'appui intermédiaire ou de butée;
- au moins un organe de roulement disposé entre des surfaces en regard de cette rondelle intermédiaire d'appui et de l'autre des organes d'appui intermédiaire ou de butée; et
- des moyens de déplacement de cet organe de roulement le long d'une rampe prévue sur l'une de ces surfaces en regard de cette rondelle d'appui et de l'autre des organes d'appui intermédiaire ou de butée, ces moyens de déplacement étant distincts de ladite rondelle intermédiaire d'appui, reliés aux moyens de manoeuvre et déplaçables à rotation autour du tirant pour amener l'organe de roulement à écarter ces surfaces en regard de la rondelle intermédiaire d'appui et de l'organe correspondant et donc l'organe d'appui intermédiaire de l'organe de butée, afin de rapprocher les flasques et bloquer la colonne en position.

Selon un autre aspect, l'invention a également pour objet un ensemble de colonne de direction réglable en position pour véhicule automobile, caractérisé en ce qu'il comporte un dispositif de blocage selon l'une quelconque des revendications précédentes.

L'invention sera mieux comprise à l'aide de la description qui va suivre, donnée uniquement à titre d'exemple et faite en se référant aux dessins annexés, sur lesquels :
- la Fig.1 représente une vue en perspective éclatée d'un dispositif de blocage en position d'une colonne de direction réglable de véhicule, décrit dans le document GB-A-2 113 164;
- la Fig.2 représente une vue en perspective d'un mode de réalisation de moyens de blocage entrant dans la constitution d'un dispositif de blocage décrit dans le document FR-A-2 671 040; et
- la Fig.3 représente une vue en coupe d'un mode de réalisation de moyens de blocage entrant dans la constitution d'un dispositif de blocage selon l'invention.

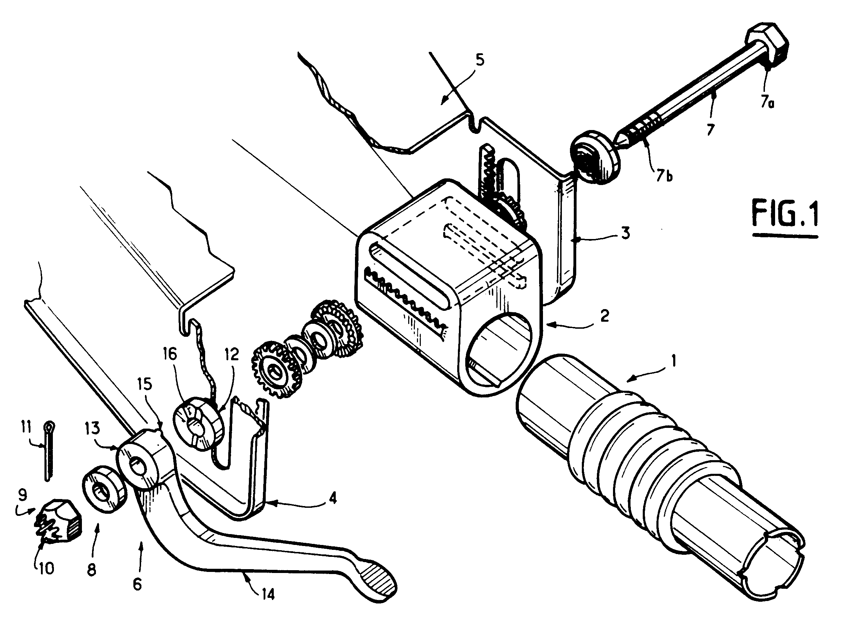

Ainsi qu'on peut le voir sur la Fig.1, qui représente un dispositif de blocage en position d'une colonne de direction réglable 1 de véhicule, décrit dans le document GB-A-2 113 164, cette colonne 1 est disposée dans un organe de liaison 2 interposé entre les flasques 3 et 4 d'une structure 5 de support de colonne, reliée au reste de la structure du véhicule par tous moyens appropriés.

Ce dispositif comporte également des moyens 6 de blocage de la colonne en position par rapprochement des flasques 3 et 4 de la structure de support. Ces moyens de blocage comprennent par exemple un tirant 7 s'étendant entre les deux flasques 3 et 4 de la structure de support et dont une première extrémité 7a est en appui sur l'un des flasques, par exemple 3, et dont l'autre extrémité 7b est reliée à des éléments de blocage 8.

Ces éléments de blocage comprennent un organe de butée 9 constitué par exemple par un écrou 10 associé à une goupille 11, et disposé à la seconde extrémité 7b du tirant 7, un organe d'appui intermédiaire 12 en contact avec l'autre flasque 4 de la structure de support et déplaçable axialement sur le tirant 7 et enfin un organe de manoeuvre 13 disposé entre l'organe de butée 9 et l'organe d'appui intermédiaire 12, relié à un levier de manoeuvre 14 et déplaçable à rotation dans un plan perpendiculaire au tirant 7, entre une position active de blocage de la colonne et une position escamotée de déblocage de celle-ci.

Dans le mode de réalisation représenté sur cette figure, les surfaces en regard de l'organe de manoeuvre 13 et de l'organe d'appui intermédiaire 12 comportent l'une, des parties en saillie 15 adaptée pour coopérer avec des rampes 16 de l'autre, pour écarter ces deux surfaces l'une de l'autre et donc les éléments de blocage correspondants afin de rapprocher les flasques pour bloquer la colonne en position, lors du déplacement du levier de manoeuvre.

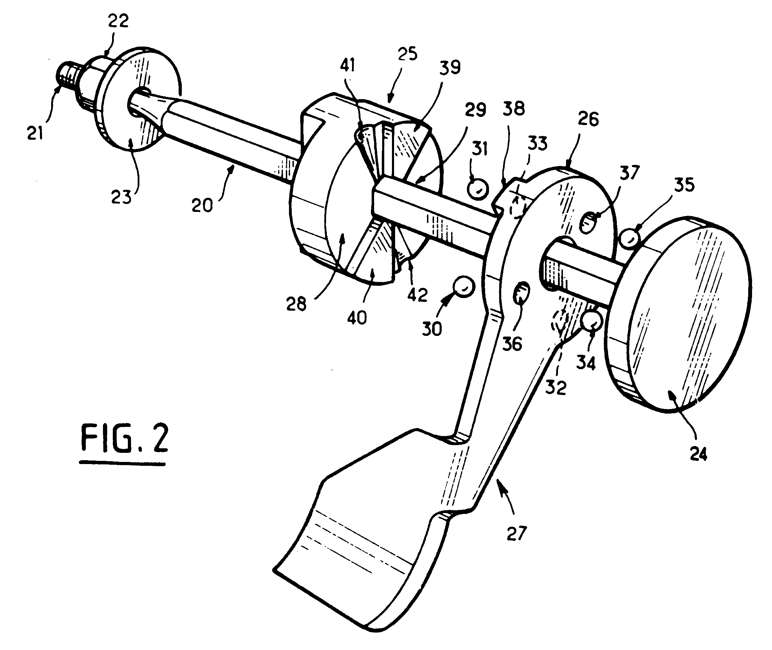

Si l'on se reporte maintenant à la Fig.2, qui représente une vue en perspective de moyens de blocage entrant dans la constitution d'un dispositif de blocage décrit dans le document FR-A-2 671 040, on peut constater que ces moyens comportent également un tirant 20 dont l'une des extrémités 21 est filetée et adaptée pour coopérer avec un écrou 22 et une rondelle 23 d'appui sur l'un des flasques de la structure de support.

On notera que les parties du dispositif non décrites en regard de cette figure, peuvent être identiques à celles décrites en regard de la Fig.1.

L'autre extrémité du tirant porte des éléments de blocage qui comprennent un organe de butée 24 constitué par exemple par une plaque de butée fixée à l'extrémité correspondante du tirant 20, et un organe d'appui intermédiaire 25 adapté pour s'appuyer contre l'autre flasque de la structure de support, cet organe d'appui intermédiaire étant monté déplaçable axialement sur le tirant.

Ces éléments de blocage comprennent également un organe de manoeuvre 26 disposé entre l'organe de butée 24 et l'organe d'appui intermédiaire 25, relié à un levier de manoeuvre 27 et déplaçable à rotation dans un plan perpendiculaire au tirant 20 entre une position active de blocage de la colonne et une position escamotée de déblocage de celle-ci.

Ainsi qu'on peut le constater, la surface de l'organe d'appui intermédiaire 25 en regard de l'organe de manoeuvre, comporte des rampes 28 et 29 par exemple diamétralement opposées, qui sont adaptées pour coopérer avec des parties en saillie sur la surface correspondante de l'organe de manoeuvre 26.

Plus particulièrement, ces parties en saillie peuvent être constituées par des organes de roulement reliés à cet organe de manoeuvre, ces organes de roulement étant constitués par exemple par des billes 30 et 31 disposées dans des évidements respectivement 32 et 33 ménagés dans la surface correspondante de l'organe de manoeuvre 26.

Il est indiqué dans ce document que des éléments de roulement constitués par exemple par des billes 34 et 35 peuvent également être disposés entre l'organe de butée 24 et l'organe de manoeuvre 26.

Ces billes sont par exemple disposées dans des évidements 36 et 37 ménagés dans la surface correspondante de l'organe de manoeuvre 26, en regard de l'organe de butée 24.

Le déplacement de l'organe de manoeuvre 26 et donc du levier de manoeuvre 27 est facilité dans la mesure où ces organes et éléments de roulement facilitent le déplacement des différents éléments de blocage les uns par rapport aux autres.

Les éléments de roulement 34 et 35 assurent un maintien en position correcte de l'organe de manoeuvre 26 par rapport à l'organe de butée 24 tout en facilitant le déplacement de l'organe de manoeuvre pendant que les organes de roulement 30 et 31 se déplacent sur les rampes 28 et 29 de l'organe d'appui intermédiaire 25, pour écarter les surfaces en regard de cet organe d'appui intermédiaire et de l'organe de manoeuvre, afin d'écarter ces éléments de blocage pour rapprocher les flasques et bloquer la colonne en position lors du déplacement de l'organe de manoeuvre 26.

Ainsi qu'on l'a indiqué précédemment, ces dispositifs de l'état de la technique présentent un certain nombre d'inconvénients.

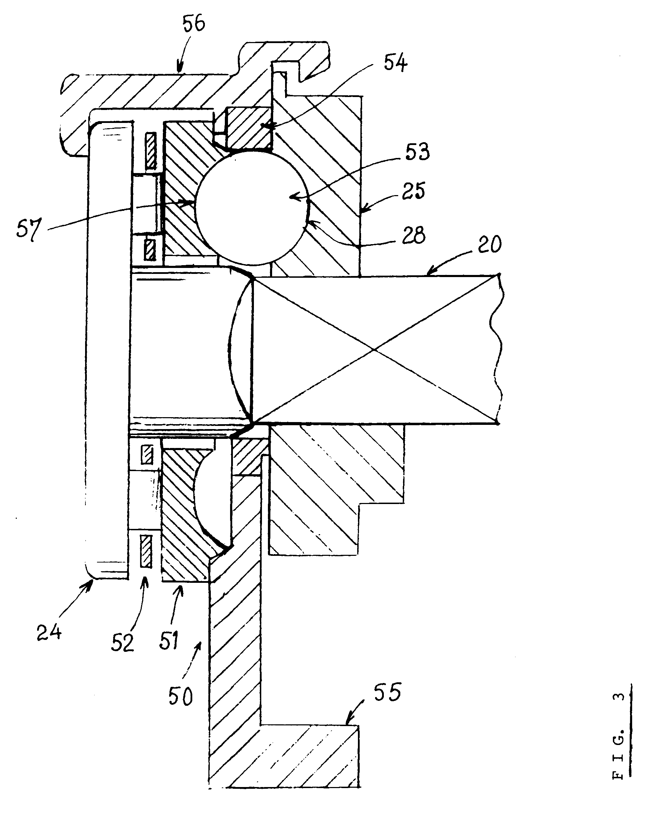

Sur la Fig.3, on a représenté un mode de réalisation de moyens de blocage entrant dans la constitution d'un dispositif de blocage selon l'invention.

Sur cette figure, les éléments identiques déjà décrits en regard de la Fig.2 portent les mêmes références que sur cette figure. C'est ainsi que ces moyens de blocage comprennent toujours un tirant 20 à une extrémité duquel sont prévus un écrou et une rondelle d'appui sur un flasque de la structure de support.

L'autre extrémité du tirant comporte l'organe de butée 24 et l'organe d'appui intermédiaire 25 entre lesquels sont disposés des moyens d'écartement 50 reliés à des moyens de manoeuvre tels qu'un levier de manoeuvre.

Ces moyens d'écartement comprennent selon l'invention une rondelle intermédiaire d'appui 51 montée libre en rotation et axialement autour du tirant 20.

Des moyens de roulement désignés par la référence générale 52 sur cette figure, et constitués par exemple par une butée à aiguilles de type classique, sont disposés entre des surfaces en regard de cette rondelle intermédiaire d'appui 51 et de l'organe de butée 24.

Au moins un organe de roulement désigné par la référence générale 53, et constitué par exemple par une bille, est disposé entre des surfaces en regard de cette rondelle intermédiaire d'appui 51 et de l'organe d'appui intermédiaire 25.

Bien entendu, l'inverse peut également être envisagé et dans ce cas, les moyens de roulement 52 sont disposés entre les surfaces en regard de la rondelle intermédiaire d'appui 51 et de l'organe d'appui intermédiaire 25, tandis que l'organe de roulement 53 est disposé entre les surfaces en regard de la rondelle intermédiaire d'appui 51 et de l'organe de butée 24.

Quelle que soit la position respective de ces pièces, des moyens 54 sont prévus pour déplacer cet organe de roulement 53 le long d'une rampe prévue sur l'une des surfaces en regard de cette rondelle intermédiaire d'appui ou de l'organe correspondant.

Cette rampe peut par exemple être constituée par la rampe 28 de l'organe d'appui intermédiaire 25 et décrite en regard de la Fig.2.

Ces moyens de déplacement 54 qui comprennent avantageusement une cage de déplacement de l'organe de roulement, sont reliés au levier de manoeuvre désigné par la référence générale 55 sur cette figure et sont montés déplaçables en rotation autour du tirant pour amener l'organe de roulement à écarter ces surfaces en regard de la rondelle d'appui et de l'organe correspondant et donc l'organe d'appui intermédiaire 25 de l'organe de butée 24, afin de rapprocher les flasques et bloquer la colonne en position.

Dans l'exemple de réalisation représenté sur cette figure 3, les moyens de déplacement constitués par la cage 54, sont reliés à un capot de protection 56 disposé autour des moyens de blocage et mobile en rotation autour de ceux-ci et le levier de manoeuvre 55 est venu de matière avec ce capot.

On notera également que l'organe de roulement 53 est monté déplaçable entre la rampe 28 de l'organe d'appui intermédiaire et une gorge 57 ménagée dans la surface de la rondelle intermédiaire d'appui 51 en regard de la surface de l'organe d'appui intermédiaire sur laquelle est prévue la rampe 28.

Bien entendu, cette rampe peut également être formée par le fond d'une gorge de réception de cette bille, ménagée dans cet organe.

L'utilisation de ces gorges permet d'obtenir une meilleure répartition des efforts sur une surface de contact plus importante entre les pièces correspondantes.

Bien entendu, la disposition de ces gorges peut être inversée, la gorge présentant un fond en forme de rampe étant ménagée dans la rondelle intermédiaire d'appui et l'autre gorge dans l'organe correspondant.

On conçoit alors que les différents efforts s'exerçant sur les différentes pièces de ce dispositif, sont répartis sur des surfaces de contact plus importantes entre l'organe d'appui intermédiaire, l'organe de roulement, la rondelle intermédiaire d'appui, les moyens de roulement et l'organe de butée, ce qui permet de réduire l'usure de ces pièces et d'utiliser des pièces en matériaux classiques, c'est à dire n'ayant pas à subir de traitements métallurgiques coûteux destinés à augmenter leurs caractéristiques de résistance mécanique.

En effet, le déplacement de ces moyens de blocage entre leur position escamotée et leur position active, est réalisé par déplacement de l'organe de roulement grâce au levier et à la cage de déplacement reliée à celle-ci, la rondelle d'appui intermédiaire et les moyens de roulement suivant ce déplacement pour éviter tout frottement entre ces pièces, alors que dans les dispositifs de l'état de la technique, ce déplacement était assuré par l'organe de manoeuvre interposé entre l'organe de butée et l'organe d'appui intermédiaire.

Le seul frottement qui subsiste dans le dispositif selon l'invention est alors le frottement entre le ou chaque organe de roulement et la cage de déplacement de celui-ci, lors de la manoeuvre du levier.

Bien entendu, différentes dispositions de ces pièces peuvent être envisagées et il peut également être prévu différents moyens de limitation de la course de déplacement du levier, par exemple grâce à des parties en saillie complémentaires de l'organe d'appui intermédiaire et de la cage de déplacement de l'organe de roulement ou grâce à des évidements de la rampe et/ou de la gorge pour faire ressentir une discontinuité d'effort à l'utilisateur ainsi que cela est mentionné dans le document FR-A-2 671 040. Ces évidements permettent également par exemple de maintenir le dispositif en position de verrouillage.

Enfin, deux organes de roulement peuvent être utilisés pour écarter les surfaces correspondantes de la rondelle et de l'organe d'appui intermédiaire ou de butée, ces organes de roulement étant disposés par exemple symétriquement de part et d'autre du tirant et adaptés pour coopérer avec des gorges et des rampes correspondantes, de façon analogue à ce qui a été décrit dans le document Français précité.

Enfin, il va de soi que des moyens de manoeuvre autres que le levier peuvent être utilisés comme par exemple des moyens d'assistance au déplacement, pilotés par exemple par un utilisateur comme cela est décrit dans la demande de brevet Français n° 92 02 101 déposée le 24 février 1992 au nom de la Demanderesse (correspondant à FR-A-2 687 628 publié le 27.08.93).

## Revendications

1. Dispositif de blocage en position d'une colonne de direction réglable par exemple de véhicule automobile, du type comportant une structure (5) de support de colonne, reliée au reste de la structure du véhicule et comportant deux flasques (3,4) entre lesquels est disposée la colonne (1), et des moyens de blocage de la colonne en position par rapprochement des flasques, comprenant un tirant (20) s'étendant entre les flasques, dont une première extrémité est en appui sur l'un des flasques et une seconde est reliée à des éléments de blocage comprenant un organe de butée (24), à la seconde extrémité du tirant, un organe d'appui intermédiaire (25) en contact avec l'autre flasque de la structure de support et déplaçable axialement sur le tirant et des moyens d'écartement (50) disposés entre l'organe de butée et l'organe d'appui intermédiaire, reliés à des moyens de manoeuvre (55) et déplaçables à rotation dans un plan perpendiculaire au tirant entre une position active de blocage de la colonne et une position escamotée de déblocage de celle-ci, caractérisé en ce que les moyens d'écartement comprennent :
- une rondelle intermédiaire d'appui (51) montée libre en rotation et axialement autour du tirant (20);
- des moyens de roulement (52) disposés entre des surfaces en regard de cette rondelle intermédiaire d'appui et de l'un des organes d'appui intermédiaire ou de butée;
- au moins un organe de roulement (53) disposé entre des surfaces en regard de cette rondelle intermédiaire d'appui et de l'autre des organes d'appui intermédiaire ou de butée; et
- des moyens de déplacement (54) de cet organe de roulement (53) le long d'une rampe (28) prévue sur l'une de ces surfaces en regard de cette rondelle intermédiaire d'appui et de l'autre des organes d'appui intermédiaire ou de butée, ces moyens de déplacement étant distincts de ladite rondelle intermédiaire d'appui, reliés aux moyens de manoeuvre (55) et déplaçables à rotation autour du tirant (20) pour amener l'organe de roulement (53) à écarter ces surfaces en regard de la rondelle intermédiaire d'appui et de l'organe correspondant et donc l'organe d'appui intermédiaire de l'organe de butée afin de rapprocher les flasques et bloquer la colonne en position.

2. Dispositif selon la revendiation 1, caractérisé en ce que le ou chaque organe de roulement (53) est formé par une bille.

3. Dispositif selon la revendication 1 ou 2, caractérisé en ce que le ou chaque organe de roulement (53) est monté déplaçable entre la rampe (28) prévue sur l'une des surfaces en regard et une gorge (57) de réception de cet organe ménagée dans l'autre des surfaces en regard.

4. Dispositif selon la revendication 1,2 ou 3, caractérisé en ce que la ou chaque rampe est formée par le fond d'une gorge de réception de l'organe.

5. Dispositif selon l'une quelconque des revendications précédentes, caractérisé en ce que les moyens de roulement (52) comprennent une butée à aiguilles.

6. Dispositif selon l'une quelconque des revendications précédentes, caractérisé en ce que les moyens de déplacement (54) comprennent une cage de déplacement dudit au moins un organe de roulement.

7. Dispositif selon l'une quelconque des revendications précédentes, caractérisé en ce que les moyens de déplacement (54) sont reliés à un capot de protection (56) disposé autour des moyens de blocage et mobile en rotation autour de ceux-ci, les moyens de manoeuvre étant formés par un levier de manoeuvre (55) venu de matière avec ce capot.

8. Ensemble de colonne de direction réglable en position pour véhicule automobile, caractérisé en ce qu'il comporte un dispositif de blocage en position de la colonne, selon l'une quelconque des revendications précédentes.

## Claims

1. Device for locking in position an adjustable steering column, for example, of a motor vehicle, of the type comprising a column supporting structure (5) connected to the rest of the structure of the vehicle and comprising two flanges (3, 4), between which the column (1) is disposed, and means for locking the column in position relative to the flanges, comprising a draw bar (20) extending between the flanges, a first end of which is supported on one of the flanges and its second end is connected to the locking elements comprising a stop (24), at the second end of said draw bar, an intermediate supporting member (25) in contact with the other flange of the supporting structure, which may be displaced axially on the draw bar, and separating means (50) disposed between the stop and the intermediate supporting member, which are connected to operating means (55) and may be rotatably displaced in a perpendicular plane to the draw bar between an active locking position of the column and a retracted unlocking position thereof, characterised in that said separating means comprise:
- an intermediate support disc (51) mounted to rotate freely and axially around the draw bar (20);
- bearing means (52) disposed between the facing surfaces of this intermediate support disc and of one of the intermediate supporting members or stops;
- at least one bearing member (53) disposed between the facing surfaces of this intermediate support disc and of the other intermediate member or stop; and
- means (54) for displacing this bearing member (53) along a ramp (28) provided on one of these facing surfaces of this intermediate support disc and the other intermediate supporting member or stop, wherein these displacement means are separate from said intermediate support disc, are connected to the operating means (55) and may be rotatably displaced around the draw bar (20) to cause the bearing member (53) to separate these facing surfaces of the intermediate support disc and the corresponding member, and thus separate the intermediate support member from the stop so that the flanges draw together and lock the column in position.

2. Device according to Claim 1, characterised in that the or each bearing member (53) is formed by a ball bearing.

3. Device according to Claim 1 or 2, characterised in that the or each bearing member (53) is mounted to shift between the ramp (28) provided on one of the facing surfaces and a receiving groove (57) of this member provided in one of the facing surfaces.

4. Device according to Claim 1, 2 or 3, characterised in that the or each ramp is formed by the base of a receiving groove of the member.

5. Device according to any one of the preceding claims, characterised in that the bearing means (52) comprise a needle stop.

6. Device according to any one of the preceding claims, characterised in that the displacement means (54) comprise a cage for displacing said at least one bearing member.

7. Device according to any one of the preceding claims, characterised in that the displacement means (54) are connected to a protective cover (56), which is disposed around the locking means and may be rotated around them, and the operating means are formed by an operating lever (55) made from one piece with said cover.

8. Motor vehicle steering column assembly which may be adjusted in position, characterised in that it comprises a device for locking the column in position according to any one of the preceding claims.

## Patentansprüche

1. Vorrichtung zur Lagefestlegung einer verstellbaren Lenksäule, beispielsweise eines Kraftfahrzeugs, mit einem Trägeraufbau (5) für die Lenksäule, welcher mit dem übrigen Fahrzeugaufbau verbunden ist und zwei Flansche (3, 4) aufweist, zwischen welchen die Lenksäule (1) angeordnet ist, und Mitteln zur Festlegung der Lenksäule in ihrer Lage durch Annäherung der Flansche, wobei diese Mittel eine sich zwischen den Flanschen erstreckende Spannstange (20) aufweisen, die mit einem ersten Ende an einem der Flansche in Anlage und mit dem anderen Ende mit Festlegungselementen verbunden ist, welche ein Widerlagerelement (24) am anderen Ende der Spannstange, ein Zwischen-Abstützelement (25), welches mit dem anderen Flansch des Trägeraufbaus in Berührung und axial auf der Spannstange versetzbar ist, und eine Spreizeinrichtung (50) umfassen, die zwischen dem Widerlagerelement und dem Zwischen-Abstützelement angeordnet und mit einer Bedienungseinrichtung (55) verbunden und in einer zur Spannstange senkrechten Ebene zwischen einer aktiven Stellung der Festlegung der Lenksäule und einer zurückgezogenen Stellung der Lösung derselben drehbar ist, dadurch gekennzeichnet, daß die Spreizeinrichtung
- eine zwischen-Anschlagscheibe (51), die auf der Spannstange (20) in Drehung und axial frei angebracht ist,
- Rollmittel (52), die zwischen einander gegenüberliegenden Flächen dieser Zwischen-Anlagescheibe und des einen von Zwischen-Abstützelement und Widerlagerelement angeordnet sind,
- wenigstens ein Rollelement (53), das zwischen einander gegenüberliegenden Flächen dieser Zwischen-Anlagescheibe und dem anderen von Zwischen-Abstützelement und Widerlagerelement angeordnet ist, und
- Mittel (54) zur Versetzung dieses Rollelements (53) längs einer Rampe (28), die an der einen dieser einander gegenüberliegenden Flächen dieser Zwischen-Anlagescheibe und des anderen von Zwischen-Abstützelement und Widerlagerelement vorgesehen ist, wobei diese Versetzungsmittel von der Zwischen-Anlagescheibe verschieden sind, mit der Bedienungseinrichtung (55) verbunden und um die Spannstange (20) in Drehung versetzbar sind, um das Rollelement (53) dazu zu bringen, diese einander gegenüberliegenden Flächen der Zwischen-Anlagescheibe und des entsprechenden Elements voneinander und damit das Zwischen-Abstützelement vom Widerlagerelement zu entfernen und so die Flansche einander anzunähern und die Lenksäule in ihrer Lage festzulegen.

2. Vorrichtung nach Anspruch 1, dadurch gekennzeichnet, daß das oder jedes Rollelement (53) durch eine Kugel gebildet ist.

3. Vorrichtung nach Anspruch 1 oder 2, dadurch gekennzeichnet, daß das oder jedes Rollelement (53) zwischen einer an der einen der einander gegenüberliegenden Flächen vorgesehenen Rampe (28) und einer in der anderen der einander gegenüberliegenden Flächen ausgebildeten Aufnahmenut (57) für dieses Element versetzbar ist.

4. Vorrichtung nach Anspruch 1, 2 oder 3, dadurch gekennzeichnet, daß die oder jede Rampe durch den Boden einer Aufnahmenut für das Element gebildet ist.

5. Vorrichtung nach irgendeinem der vorstehenden Ansprüche, dadurch gekennzeichnet, daß die Rollmittel (52) ein Nadeldrucklager aufweisen.

6. Vorrichtung nach irgendeinem der vorstehenden Ansprüche, dadurch gekennzeichnet, daß die Versetzungsmittel (54) einen Versetzungskäfig für das wenigstens eine Rollelement aufweisen.

7. Vorrichtung nach irgendeinem der vorstehenden Ansprüche, dadurch gekennzeichnet, daß die Versetzungsmittel (54) mit einer Schutzkappe (56) verbunden sind, die um die Festlegungsmittel herum angeordnet und um die Achse derselben drehbar ist, wobei die Bedienungseinrichtung durch einen mit der Kappe einstückigen Bedienungshebel (55) gebildet ist.

8. Lageeinstellbarer Lenksäulenaufbau für Kraftfahrzeuge, dadurch gekennzeichnet, daß er eine Lagefestlegungsvorrichtung für die Lenksäule nach irgendeinem der vorstehenden Ansprüche aufweist.
